# FASCICULE DE BREVET EUROPEEN

(11) **EP 1 697 113 B1**
(45) Date de publication et mention de la délivrance du brevet: **26.03.2008**
(21) Numéro de dépôt: 04805798.8
(22) Date de dépôt: 02.11.2004
(51) Int. Cl.: B29D 11/00

(54) **PROCEDE DE FABRICATION D UN CONDUIT OPTIQUE EN MATIERE THERM OPLASTIQUE**
VERFAHREN ZUR HERSTELLUNG EINER THERMOPLASTISCHEN OPTISCHEN LEITUNG
METHOD FOR THE PRODUCTION OF A THERMOPLASTIC OPTICAL CONDUIT

(30) Priorité: 24.12.2003 FR 0351207
(43) Date de publication de la demande: 06.09.2006
(73) Titulaire: ESSILOR INTERNATIONAL (Compagnie Générale d'Optique), 94227 Charenton le Pont (FR)
(72) Inventeur: BUCHON, Cédric, F-94227 Charenton (FR)
(74) Mandataire: Lenne, Laurence
(86) Numéro de dépôt international: PCT/FR2004/050555
(87) Numéro de publication internationale: WO 2005/063474

(56) Documents cités:
- WO-A-00/79329
- US-A- 6 023 372

## Description

La présente invention se rapporte à un procédé de fabrication d'un conduit optique en matière thermoplastique en particulier destiné à la réalisation d'un agencement d'affichage électronique monté sur une monture de type paire de lunettes.

Un tel agencement d'affichage est décrit dans le brevet US 6 023 372 et représenté en vue de dessus sur la figure 1.

WO 0079329 divulge un procédé de fabrication d'un conduit optique selon la préambule de la première revendication.

Un tel agencement 10 comprend un ensemble de boîtier 16 comportant un premier boîtier 20 contenant un circuit de réception de données ou d'images et contenant un ensemble générateur d'images. La lumière transmise par cet ensemble générateur d'images est relayée par l'intermédiaire d'un dispositif optique 14 vers l'oeil de l'utilisateur par exemple au travers d'une lentille de lunette 24. Ce conduit optique 14 comprend un relais optique rectiligne transparent 26 transmettant la lumière selon son axe longitudinal A-A' et un ensemble de déviation 28 comprenant un miroir 30 disposé sur une surface inclinée par rapport au premier axe A-A' et une lentille 32 asphérique dont l'axe de révolution B-B' est ici perpendiculaire au premier axe A-A', et disposée au droit de cette paroi inclinée. L'ensemble de boîtier 16 est monté sur une branche 34 d'une monture de paire de lunettes grâce à un agencement d'accrochage 36.

Le conduit présente une hauteur maximale donnée Hₘₐₓ hors l'épaisseur de la lentille et une longueur moyenne donnée L_{moy} sur son axe longitudinal A-A'. A titre d'exemple, un tel conduit optique connu présente une hauteur maximale Hₘₐₓ de 11 millimètres et une longueur moyenne L_{moy} de 32 millimètres.

Il est connu de fabriquer ce conduit optique 14 par collage des différentes parties moulées en PMMA (plastique polyméthacrylate de méthyle) ou en « Zéonex » (polymère cyclo-oléfine). Ces différentes parties comprennent le relais optique 26 réalisé par découpe dans une plaque d'un barreau parallélépipédique qui est ensuite usiné et poli à ses extrémités et destiné à porter également par collage le miroir 30 et la lentille 32 également moulée.

Un tel procédé de fabrication est complexe car il comporte de nombreuses étapes de traitement, découpe, usinage, polissage et collage et nécessite lors de ces étapes une grande précision. Il est en conséquence long et coûteux.

L'invention résout ce problème grâce à un procédé de fabrication selon revendication 1 qui est simple et rapide, plus adapté à la fabrication en série, tout en assurant une qualité parfaite de transmission optique grâce à une excellente homogénéité de matériau constitutif ce qui permet d'éviter toute déformation de l'image transmise.

Pour ce faire, elle propose un procédé de fabrication d'un conduit optique en matière thermoplastique comportant un relais optique formé d'un barreau parallélépipédique destiné à transmettre la lumière selon son axe longitudinal, dit premier axe, et pourvu à une de ses extrémités d'une paroi inclinée par rapport audit premier axe et d'une lentille, dont l'axe de révolution est contenu dans un plan de symétrie longitudinal, ce conduit présentant une hauteur maximale donnée Hₘₐₓ hors l'épaisseur de la lentille et une longueur moyenne donnée L_{moy} sur son axe longitudinal, caractérisé en ce que le conduit est réalisé d'une seule pièce par injection de ladite matière thermoplastique dans un moule présentant une cavité de forme identique à celle du conduit, l'injection se faisant au travers d'un seuil d'injection disposé latéralement à ladite cavité sur une face sensiblement parallèle au plan défini par lesdits axes, ledit seuil présentant une hauteur h comprise entre 0,2 Hₘₐₓ et Hₘₐₓ et une longueur I comprise entre 0,2 L_{moy} et 0,8 L_{moy}, la matière thermoplastique étant injectée à un débit compris entre 400 et 1500 mm³/s.

Grâce à ces caractéristiques, il est assuré une homogénéité du matériau au sein du conduit optique moulé permettant une transmission optimale de la lumière. L'index de réfraction y est uniforme ce qui supprime tout chromatisme ou déformation de l'image transmise.

Selon un mode de réalisation préféré, ladite hauteur h dudit seuil est égale à 0,8 Hₘₐₓ et ladite longueur I dudit seuil est égale à 0,8 L_{moy}.

Et de préférence, ledit débit est égal à 725 mm³/s.

Avantageusement, ledit moule est tenu à une température régulée entre 70 et 90°C.

Avantageusement, ledit moule comporte une évacuation latérale de trop plein symétrique audit seuil par rapport au plan défini par lesdits axes.

De préférence, ledit moule est prolongé d'une première partie de moulage annexe sensiblement parallélépipédique dont la sortie correspond audit seuil.

Et avantageusement, ledit moule est prolongé par une seconde partie de moule annexe de trop plein sensiblement parallélépipédique dont l'entrée correspond à ladite évacuation latérale.

Selon une autre caractéristique, le procédé conforme à l'invention comporte une étape de compactage-maintien de la matière injectée.

Cette étape a pour fonction de compenser la variation de volume spécifique se produisant au cours du refroidissement, grâce à un apport supplémentaire de matière fondue.

Ladite étape de compactage-maintien peut être effectuée par paliers.

Ladite matière thermoplastique peut être du « Zéonex » ou du PMMA.

Dans ce dernier cas, de préférence, le PMMA est injecté à une température d'environ 220°C à un débit de sensiblement 725 mm³/s, puis compacté à 58 MPa.

De préférence, le PMMA est compacté après injection à 43 MPa durant 1 seconde, puis à 46 MPa durant 2 secondes, puis à 50 MPA durant 3 secondes et enfin à 58 Mpa durant 40s, et son temps de refroidissement dans le moule étant ensuite de 150 secondes.

L'invention est décrite ci-après plus en détail en relation avec des figures ne représentant qu'un mode de réalisation préféré de l'invention.
La figure 1 est une vue de dessus d'un agencement d'affichage électronique connu monté sur une monture de type paire de lunettes et a été déjà précisée ci-dessus.
La figure 2 est une vue en coupe longitudinale d'un moule selon le procédé conforme à l'invention.
La figure 3 est une vue en perspective d'une pièce moulée destinée à former un conduit optique grâce au procédé conforme à l'invention.
La figure 4 est une vue en perspective d'une pièce moulée destinée à former deux conduits optiques grâce au procédé conforme à l'invention.

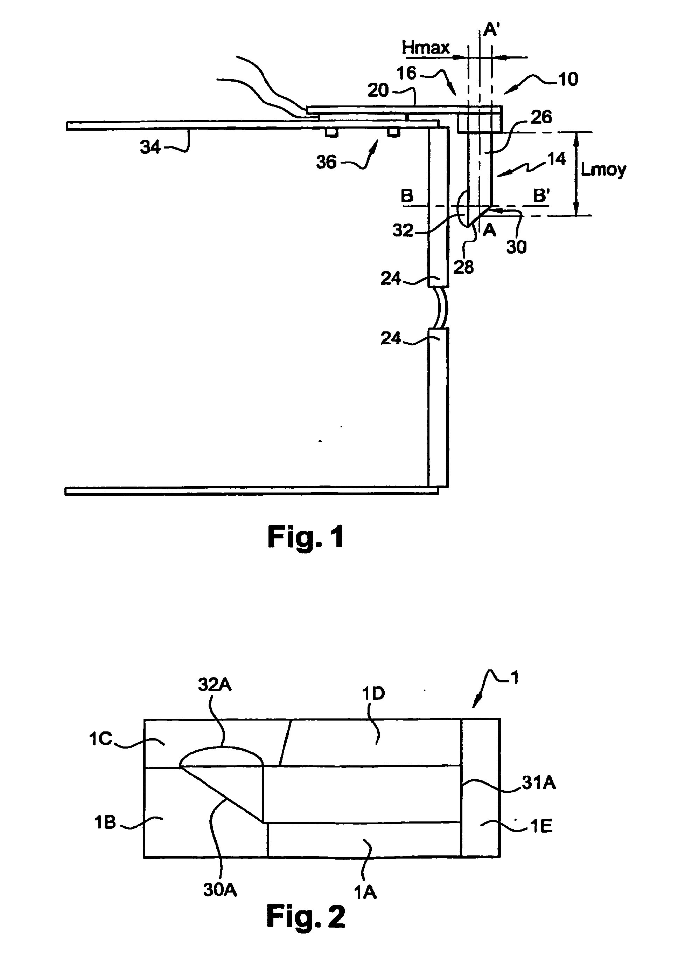

Sur la figure 1, sont représentés un mode de réalisation du conduit optique ainsi qu'un mode de montage de ce conduit, ici sur une monture de type paire de lunettes.

Dans le cadre de l'invention, le conduit optique 14 peut être légèrement différent. En particulier, l'axe de révolution B-B' de la lentille peut ne pas être perpendiculaire au premier axe A-A' mais incliné d'un angle compris entre 75 et 90° par rapport à cet axe. Ceci permet une adaptation ergonomique du conduit optique une fois monté, ce dernier suivant la forme du visage de l'utilisateur.

Par ailleurs, le conduit peut également être monté sur un système spécifique se positionnant devant les yeux d'un utilisateur, autre qu'une monture de lunette.

Selon le procédé conforme à l'invention, est utilisé un moule 1 en plusieurs parties ou inserts comme représenté sur la figure 2. Un insert est utilisé par face du conduit à fabriquer.

Plus précisément, le moule comporte cinq inserts 1A à 1E dont les inserts 1B, 1C et 1E correspondent aux faces optiques actives que constituent la surface de la lentille 32A, la surface inclinée portant le miroir 30A et la surface frontale du relais 31 A appelée fenêtre d'entrée. Ces inserts sont en acier au béryllium assurant le moulage de faces optiques parfaites.

Le moule en soi ne sera pas plus précisé ici, étant en soi à la portée de l'homme du métier.

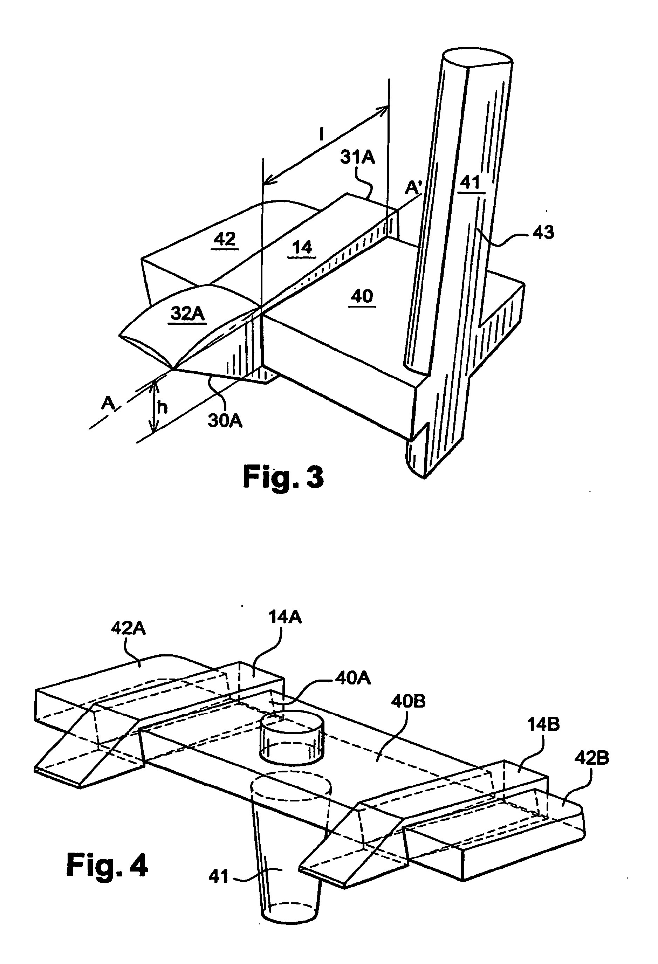

Le procédé conforme à l'invention sera précisé au moyen de la figure 3 représentant la pièce obtenue par moulage. De cette vue de la pièce, l'homme du métier déduit de façon évidente le moule à inserts correspondant.

Selon l'invention, le conduit est réalisé d'une seule pièce par injection d'une matière thermoplastique dans le moule présentant une cavité de forme identique à celle du conduit, l'injection se faisant au travers d'un seuil d'injection disposé latéralement à la cavité sur une face sensiblement parallèle au plan défini par lesdits axes A-A', B-B', ce seuil présentant une hauteur h comprise entre 0,2 Hₘₐₓ et Hₘₐₓ et une longueur 1 comprise entre 0,2 L_{moy} et 0,8 L_{moy}, la matière thermoplastique étant injectée à un débit compris entre 400 et 1500 mm³/s.

Selon un mode de réalisation préféré, la hauteur h du seuil est égale à 0,8 Hₘₐₓ, la longueur I du seuil est égale à 0,8 L_{moy} et le débit est égal à 725 mm³/s.

Le moule 1 est tenu à une température régulée entre 70 et 90°C.

Pour réaliser ce seuil d'injection, le moule est prolongé d'une première partie de moulage annexe sensiblement parallélépipédique dont la sortie correspond à ce seuil et dont la partie moulée correspondante 40 est un parallélépipède latéral au conduit 14. Un puits d'injection assure l'entrée en matière dans ce moule, la pièce moulée 41 correspondante à ce puits étant perpendiculaire à l'axe longitudinal A-A'.

Le moule comporte également une évacuation latérale de trop plein symétrique au seuil d'injection par rapport au plan défini par lesdits axes A-A' et B-B'. Plus précisément, le moule est prolongé par une seconde partie de moule annexe de trop plein sensiblement parallélépipédique dont l'entrée correspond à cette évacuation latérale. La partie moulée correspondante 42 est un parallélépipède latéral, disposé de l'autre côté du conduit 14.

Avantageusement, un moule à double empreinte est utilisé, dans le sens où le plan 43 représenté sur la figure 3 est un plan de symétrie du moule complet. La pièce moulée correspondante à ce moule complet est représentée sur la figure 4.

La partie moulée 41 semi-conique correspond à un puits d'injection unique. Par ce puits, sont ainsi moulés deux conduits optiques 14A et 14B, avec leurs deux parties annexes respectives 40A, 42A et 40B, 42B. Les deux premières parties annexes d'injection forment alors une partie de moulage commune reliant les deux cavités de forme identique aux conduits 14.

A titre d'exemple, la matière thermoplastique peut être du « Zéonex » ou du PMMA.

Le procédé conforme à l'invention va maintenant être précisé selon un mode de réalisation particulier, selon lequel la matière thermoplastique utilisée est du PMMA, qu'il est connu d'employer pour fabriquer des pièces optiques de bonne précision.

Le PMMA est injecté dans le puits d'injection à une température de 220°C à un débit de 725 mm³/s. Une telle opération de remplissage dure de 7 à 20 secondes.

Le PMMA est ensuite compacté par palier à 43 MPa durant 1 seconde, puis à 46 MPa durant 2 secondes, puis à 50 MPA durant 3 secondes et enfin à 58 MPa durant 40 secondes, et son temps de refroidissement dans le moule étant ensuite de 150 secondes.

La pièce moulée obtenue est ensuite refroidie environ 10 mn à l'extérieur de son moule.

La pièce moulée telle que représentée sur la figure 4 est ensuite découpée pour obtenir les conduits optiques 14A et 14B séparés. Sur leur face inclinée, un miroir est réalisé par dépôt d'une couche d'aluminium ou collage d'une lame plane minérale miroitée. Eventuellement, la fenêtre d'entrée peut être revêtue d'une lame plane anti-reflet. Le conduit optique ainsi fabriqué peut être traité en surface par vernis afin d'assurer sa résistance aux agressions extérieures. En particulier, les faces non actives optiquement peuvent être revêtues d'une peinture afin d'augmenter le contraste du conduit.

Ces deux conduits optiques 14A et 14B sont destinés à être montés sur une monture de type paire de lunettes ou sur un système spécifique se positionnant devant les yeux d'un utilisateur, pour former un agencement d'affichage électronique par exemple tel que représenté sur la figure 1.

## Revendications

1. Procédé de fabrication d'un conduit optique (14) en matière thermoplastique comportant un relais optique (26) formé d'un barreau parallélépipédique destiné à transmettre la lumière selon son axe longitudinal (A-A'), dit premier axe, et pourvu à une de ses extrémités d'une paroi inclinée (28) par rapport audit premier axe et d'une lentille (32), dont l'axe de révolution (B-B') est contenu dans un plan de symétrie longitudinal, ce conduit (14) présentant une hauteur maximale donnée Hₘₐₓ hors l'épaisseur de la lentille et une longueur moyenne donnée L_{moy} sur son axe longitudinal (A-A'), **caractérisé en ce que** le conduit étant réalisé d'une seule pièce par injection de ladite matière thermoplastique dans un moule (1) présentant une cavité de forme identique à celle du conduit, l'injection se faisant au travers d'un seuil d'injection disposé latéralement à ladite cavité sur une face sensiblement parallèle au plan défini par lesdits axes (A-A', B-B'), ledit seuil présentant une hauteur h comprise entre 0,2 Hₘₐₓ et Hₘₐₓ et une longueur I comprise entre 0,2 L_{moy} et 0,8 L_{moy}, la matière thermoplastique étant injectée à un débit compris entre 400 et 1500 mm³/s.

2. Procédé selon la revendication 1, **caractérisé en ce que** ladite hauteur h dudit seuil est égale à 0,8 Hₘₐₓ et ladite longueur I dudit seuil est égale à 0,8 L_{moy}.

3. Procédé selon la revendication 1 ou 2, **caractérisé en ce que** ledit débit est égal à 725 mm³/s.

4. Procédé selon l'une des revendications précédentes, **caractérisé en ce que** ledit moule (1) est tenu à une température régulée entre 70 et 90°C.

5. Procédé selon une des revendications précédentes, **caractérisé en ce que** ledit moule (1) comporte une évacuation latérale de trop plein symétrique audit seuil par rapport au plan défini par lesdits axes.

6. Procédé selon une des revendications précédentes, **caractérisé en ce que** ledit moule (1) est prolongé d'une première partie de moulage annexe sensiblement parallélépipédique dont la sortie correspond audit seuil.

7. Procédé selon les revendications 5 et 6, **caractérisé en ce que** ledit moule (1) est prolongé par une seconde partie de moule annexe de trop plein sensiblement parallélépipédique dont l'entrée correspond à ladite évacuation latérale.

8. Procédé selon l'une des revendications précédentes, **caractérisé en ce qu'**il comporte une étape de compactage-maintien de la matière injectée.

9. Procédé selon la revendication 8, **caractérisé en ce que** ladite étape de compactage-maintien est effectuée par paliers.

10. Procédé selon l'une des revendications précédentes, **caractérisé en ce que** ladite matière thermoplastique est du « Zéonex ».

11. Procédé selon l'une des revendications 1 à 9, **caractérisé en ce que** ladite matière thermoplastique est du PMMA.

12. Procédé selon la revendication 11, **caractérisé en ce que** le PMMA est injecté à une température d'environ 220°C à un débit de sensiblement 725 mm³/s, puis compacté à 58 MPa.

13. Procédé selon la revendication 12, **caractérisé en ce que** le PMMA est compacté après injection à 43 MPa durant 1 seconde, puis à 46 MPa durant 2 secondes, puis à 50 MPA durant 3 secondes et enfin à 58 MPa durant 40 secondes, et son temps de refroidissement dans le moule étant ensuite de 150 secondes.

## Claims

1. A method of fabricating a light duct (14) of thermoplastic material, the duct comprising a light relay (26) constituted by a rectangular section bar for conveying light along its longitudinal axis (A-A') referred to as a "first" axis, and provided at one of its ends both with a wall (28) that is inclined relative to said first axis, and with a lens (32), the axis of revolution (B-B') of the lens being contained in a longitudinal plane of symmetry, said duct (14) presenting a given maximum height Hₘₐₓ beyond the thickness of the lens and a given mean length L_{moy} along its longitudinal axis (A-A'), the duct being **characterized in that** it is made as a single piece by injection molding said thermoplastic material in a mold (1) presenting a cavity of shape identical to that of the duct, the injection taking place through a feed orifice disposed on one side of said cavity over a face that is substantially parallel to the plane defined by said axes (A-A', B-B'), said feed orifice presenting a height h lying in the range 0.2 Hₘₐₓ and Hₘₐₓ, and a length ℓ lying in the range 0.2 L_{moy} and 0.8 L_{moy}, the thermoplastic material being injected at a rate lying in the range 400 mm³/s to 1500 mm³/s.

2. A method according to claim 1, **characterized in that** said height h of said feed orifice is equal to 0.8 Hₘₐₓ and said length ℓ of said feed orifice is equal to 0.8 L_{moy}.

3. A method according to claim 1 or claim 2, **characterized in that** said rate is equal to 725 mm³/s.

4. A method according to any preceding claim, **characterized in that** said mold (1) is maintained at a temperature regulated in the range 70°C to 90°C.

5. A method according to any preceding claim, **characterized in that** said mold (1) includes a lateral overflow orifice symmetrical to said feed orifice relative to the plane defined by said axes.

6. A method according to any preceding claim, **characterized in that** said mold (1) is extended by a first auxiliary mold portion of substantially rectangular section and of outlet corresponding to said feed orifice.

7. A method according to claims 5 and 6, **characterized in that** said mold (1) is extended by an overflow second auxiliary mold portion of substantially rectangular section, and of inlet corresponding to said lateral overflow orifice.

8. A method according to any preceding claim, **characterized in that** it includes a compacting and holding step applied to the injected material.

9. A method according to claim 8, **characterized in that** said compacting and holding step is performed in stages.

10. A method according to any preceding claim, **characterized in that** said thermoplastic material is "Zeonex".

11. A method according to any one of claims 1 to 9, **characterized in that** said thermoplastic material is PMMA.

12. A method according to claim 11, **characterized in that** the PMMA is injected at a temperature of about 220°C and at a rate of substantially 725 mm³/s, and is then compacted at 58 MPa.

13. A method according to claim 12, **characterized in that** the PMMA is compacted after injection at 43 MPa for 1 s, then at 46 MPa for 2 s, then at 50 MPa for 3 s, and finally at 58 MPa for 40 s, and its cooling time in the mold is then 150 s.

## Patentansprüche

1. Verfahren zur Herstellung eines optischen Leiters (14) aus thermoplastischem Material, welcher ein optisches Relais (26) aufweist, das aus einem parallelepipedförmigen Stab gebildet ist, der dazu dient, das Licht entlang seiner Längsachse (A-A'), erste Achse genannt, zu übertragen, und an einem seiner Enden eine bezogen auf die erste Achse geneigte Wand (28) und eine Linse (32) aufweist, deren Hauptachse (B-B') in der Längssymmetrieebene liegt, wobei der Leiter (14) eine gegebene maximale Höhe Hₘₐₓ gegenüber der Dicke der Linse und in seiner Längsachse (A-A') eine gegebene mittlere Länge L_{moy} aufweist, **dadurch gekennzeichnet, dass** der Leiter durch Einspritzen des thermoplastischen Materials in eine Gießform (1) in einem Stück hergestellt wird, welche einen Hohlraum aufweist, dessen Form mit der des Leiters identisch ist, wobei das Einspritzen über eine Anspritzöffnung bewirkt wird, die seitlich des Hohlraums auf einer Fläche angeordnet ist, die im Wesentlichen parallel zur der durch die Achsen (A-A', B-B') abgegrenzten Ebene ist, wobei die Öffnung eine Höhe h zwischen 0,2 Hₘₐₓ und Hₘₐₓ und eine Länge 1 zwischen 0,2 L_{moy} und 0,8 L_{moy} aufweist, und wobei das thermoplastische Material mit einem Durchsatz zwischen 400 und 1500 mm³/s eingespritzt wird.

2. Verfahren gemäß Anspruch 1, **dadurch gekennzeichnet, dass** die Höhe h der Öffnung gleich 0,8 Hₘₐₓ und die Länge 1 der Öffnung gleich 0,8 L_{moy} ist.

3. Verfahren gemäß Anspruch 1 oder 2, **dadurch gekennzeichnet, dass** der Durchsatz gleich 725 mm³/s ist.

4. Verfahren gemäß einem der vorausgegangenen Ansprüche, **dadurch gekennzeichnet, dass** die Gießform (1) bei einer regulierten Temperatur zwischen 70 und 90°C gehalten wird.

5. Verfahren gemäß einem der vorausgegangenen Ansprüche, **dadurch gekennzeichnet, dass** die Gießform (1) einen seitlichen Abfluss als Überlauf aufweist, der zur Öffnung bezogen auf die durch die Achsen abgegrenzte Ebene symmetrisch ist.

6. Verfahren gemäß einem der vorausgegangenen Ansprüche, **dadurch gekennzeichnet, dass** die Gießform (1) durch ein erstes anhängendes Gießformteil, das im Wesentlichen parallelepipedförmig ist und dessen Ausgang der Öffnung entspricht, verlängert wird.

7. Verfahren gemäß Anspruch 5 und 6, **dadurch gekennzeichnet, dass** die Gießform (1) durch ein zweites anhängendes Gießformteil als Überlauf, das im Wesentlichen parallelepipedförmig ist und dessen Eingang dem seitlichen Abfluss entspricht, verlängert wird.

8. Verfahren gemäß einem der vorausgegangenen Ansprüche, **dadurch gekennzeichnet, dass** es einen Schritt der Beibehaltung der Verdichtung des eingespritzten Materials aufweist.

9. Verfahren gemäß Anspruch 8, **dadurch gekennzeichnet, dass** der Schritt der Beibehaltung der Verdichtung stufenweise durchgeführt wird.

10. Verfahren gemäß einem der vorausgegangenen Ansprüche, **dadurch gekennzeichnet, dass** das thermoplastische Material "Zeonex" ist.

11. Verfahren gemäß einem der Ansprüche 1 bis 9, **dadurch gekennzeichnet, dass** das thermoplastische Material PMMA ist.

12. Verfahren gemäß Anspruch 11, **dadurch gekennzeichnet, dass** das PMMA bei einer Temperatur von ungefähr 220°C mit einem Durchsatz von etwa 725 mm³/s eingespritzt und dann mit 58 MPa verdichtet wird.

13. Verfahren gemäß Anspruch 12, **dadurch gekennzeichnet, dass** das PMMA nach Einspritzen mit 43 MPa für 1 Sekunde, dann mit 46 MPa für 2 Sekunden, dann mit 50 MPa für 3 Sekunden und schließlich mit 58 MPa für 40 Sekunden verdichtet wird und die Abkühlzeit in der Gießform dann 150 Sekunden beträgt.
